# DEMANDE DE BREVET EUROPEEN

(11) **EP 1 088 485 A1**
(43) Date de publication de la demande: **04.04.2001**
(21) Numéro de dépôt: 99402335.6
(22) Date de dépôt: 23.09.1999
(51) Int. Cl.: A23L 1/216, A23L 1/48

(54) **Raviole de pomme de terre**

(71) Demandeur: Ruggieri, Marc, 25200 Montbeliard (FR); Wilfling, Josef, 74500 St Gingolph (FR)
(72) Inventeur: Ruggieri, Marc, 25200 Montbeliard (FR); Wilfling, Josef, 74500 St Gingolph (FR)

(57) **Abrégé**

Raviole de pomme de terre (4) réalisé à partir de deux couches (2) et (3) de pomme de terre émincées finement, garnies d'une farce façon duxelle.

La Raviole de pomme de terre (4) étant destinée à toutes les restaurations classique, de masse ou différée.

## Description

La présente invention concerne un produit agro-alimentaire à base de pomme de terre garnie d'une farce de viande, légume, poisson, ou fruits secs ou confits.

Jusque là, il n'est pas possible de trouver un produit de consommation courante qui offre une préparation de bon goût réunissant comme élément principal d'un repas une chips et un élément protéinique.

Raviole de pomme de terre cuite à la poële dans du beurre clarifié ou de l'huile de cuisson comprenant une enveloppe réalisée par deux tranches de pome de terre finement émincées de 0,1 à 0,5 mm sur une trancheuse sans avoir été au préalable mise en présence d'une solution aqueuse qui détruirait les propriétés que l'amidon de la pomme de terre a pour lier et souder l'une contre l'autre deux tranches ainsi réalisées.

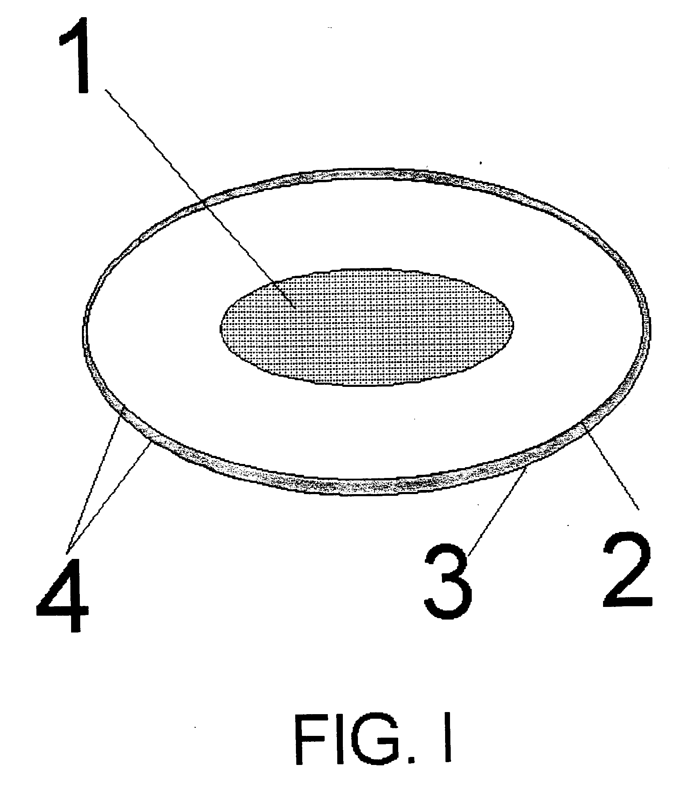

La première invention sera mieux comprise en se référant à la figure suivante :

La figure I représente la Raviole de pomme de terre en vue d'ensemble (4) contenant un remplissage humide et pateux : la farce (1) qui est donc en contact avec les surfaces internes des deux tranches de pomme de terre (2) et (3).

La farce (1) étant composée à base d'oignons finement ciselés, sués dans la graisse de canard additionnée d'une brunoise de jambon blanc, de champignons et de tomates mondées épépinnées, le tout revenu avec l'oignon. Relevé d'un assaisonnement haut en goût et en herbes fines. En final et hors du feu, il est ajouté des dés de pain de mie pour ramener la farce (1) à un taux d'humidité qui lui donne la particularité d'être couchée sur une tranche de pomme de terre (3) sans laisser suinter du jus ou à l'inverse en dessèchant trop la farce; à cela enfin et dans le but de lier la farce (1), il est ajouté des jaunes d'oeuf.

L'assemblage de la Raviole de pomme de terre (4) s'effectue en chevauchant deux tranches de pomme de terre (2) et (3) intercalées par une dose de farce (1) en son centre, laissant une marge en périphérie pour les souder entre elles.

La Raviole de pomme de terre (4) est cuite à l'huile de cuisson ou au beurre clarifié.

Une phase de surgélation peut intervenir entre l'assemblage et la cuisson pour différer dans le temps ces deux dernières.

La Raviole de pomme de terre peut être conservée en barquette operculées sous atmosphère controlée.

La recette selon son originalité, fabriquée en continue des produits bruts aux produits finis surgelés, frais ou sèchés, conditionnée en barquette rigide obturée ou en conditonnement de snack, est destinée à la restauration classique, haut de gamme, traditionnelle et collective, et sera également appréciée au rayon surgelé et frais des grandes surfaces pour les ménagères.

## Revendications

1. Raviole de pomme de terre (4) caractérisée en ce qu'elle comporte une partie réalisées par deux fines couches de pomme de terre émincées (2) et (3) et d'une autre partie comprenant une farce (2) composée à partir de graisse de canard, d'oignons, de jambon, de champignons, de tomates, de pain de mie et de jaune d'oeufs.

2. Raviole de pomme de terre (4) selon la revendication 1 caractérisée en ce qu'elle comporte du beurre clarifié ou de l'huile de cuisson neutre ou parfumée.

3. Raviole de pomme de terre (4) caractérisée en ce que la farce (1) est cuite au préalable et refroidie avant son utilisation.

4. Raviole de pomme de terre (4) selon la revendication 1 caractérisée en ce que les couches de pomme de terre (2) et (3) reste soudée entre elles et tiennent sous l'action de l'amidon de constitution de la pomme de terre.
